# EUROPEAN PATENT SPECIFICATION

(11) **EP 0 923 862 B1**
(45) Date of publication and mention of the grant of the patent: **16.04.2003**
(21) Application number: 98123907.2
(22) Date of filing: 16.12.1998
(51) Int. Cl.: A01K 89/01

(54) **Spinning reel for fishing**
Angelwinde
Moulinet de pêche

(30) Priority: 22.12.1997 JP 35369597
(43) Date of publication of application: 23.06.1999
(73) Proprietor: DAIWA SEIKO INC., Higashikurume-shi, Tokyo (JP)
(72) Inventor: Murakami, Shinji, Higashikurume-shi, Tokyo (JP)
(74) Representative: Grünecker, Kinkeldey, Stockmair & Schwanhäusser Anwaltssozietät

(56) References cited:
- US-A- 5 078 334
- US-A- 5 419 505
- US-A- 5 456 418

## Description

The present invention relates to a fishing spinning reel comprising: a spool shaft extending out from a reel main body; a spool removably mounted on said spool shaft and around which a fishing line can be wound; regulate means for regulating the rotation and axial movement of said spool with respect to said spool shaft; and a single rattle regulate member including a first energizing portion for energizing said spool in the axial direction thereof, and a second energizing portion for energizing said spool in the rotation direction thereof, said rattle regulate member being pressure contactable at said first and second energizing portions thereof with said spool, which is mounted on said spool shaft to thereby be able to prevent the rattle of said spool in the rotation direction and in the axial direction thereof with respect to said spool shaft.

Generally, a spinning reel includes a spool shaft extending out from a reel main body and movable back and forth and, on the spool shaft, there is removably mounted a spool around which a fishing line can be wound.

Conventionally, to mount the spool onto the spool shaft, an engaging member disposed on the spool side is elastically engaged with an annular groove formed in the front end portion of the spool shaft, and a pin disposed at the middle position of the spool shaft is fitted with a recessed portion formed on the spool side. In such mounted state of the spool, not only the insertion of the engaging member and pin regulates or restricts the back-and-forth movement of the spool along the spool shaft but also the fitting engagement between the pin and recessed portion regulates or restricts prevents the rotation of the spool.

By the way, in order to absorb dimensional errors as well as facilitate the mounting of the spool onto the spool shaft, the engagement between the engaging member and annular groove as well as the fitting engagement between the recessed portion and pin are executed with some play. That is, the width of the annular groove is set somewhat larger than the width of the engaging member, while the width of the recessed portion is set somewhat larger than the diameter of the pin. Therefore, when the spool is mounted onto the spool shaft, the spool rattles in the axial direction as well as in the rotation direction thereof.

However, if the spool rattles in this manner, then there can occur some unfavorable conditions: for example, in actual fishing, a timing for striking fish can be delayed to thereby fail to catch the fish, or, in reeling in the fishing line, the spool can be vibrated in the peripheral direction by an amount corresponding to the play thereof to thereby impair the reel operation feeling.

In view of the above, for example, in Japanese Utility Model Publication No. 6-7475 of Heisei, there are disposed a stopper and a contact piece-on the spool in such a manner that they are opposed to each other, the contact piece is energized toward the stopper side by energizing means, and the above-mentioned pin of the spool shaft is held by and between the contact piece and stopper, thereby preventing the rattle of the spool in the rotation direction thereof. That is, by bringing the pin and stopper into contact with each other using the energizing force of the energizing means, the spool is regulated in such a manner that no rattle can be produced in the spool when it is rotated.

However, since the rotation regulate structure disclosed in the present publication is very complicated and requires a large number of parts, it cannot be assembled efficiently and the cost thereof is expensive.

Further, the U.S. 5,078,334 A discloses a fishing reel of the kind as mentioned above. Therein, the rattle regulate member is formed as an annular seal made of a rubber component. This material, however, tends to show wear very easily, such that often replacement thereof is required.

Accordingly, it is an object of the invention to improve a fishing spinning reel of the kind as mentioned above, to show an improved resistance to wear, thereby preventing the spool from rattling in the axial direction as well as in the rotation direction thereof, such eliminating drawbacks found in the above-mentioned conventional spinning reel.

For a fishing spinning reel of the kind as mentioned above this object is solved in an inventive manner according to the invention, in that said regulate member is formed of a plate spring.

Further preferred embodiments of the invention are subject to the subclaims.

In the following, preferred embodiments of this invention will be described in detail, with reference to the following figures, wherein:
Fig. 1 is a partially sectional side view of a spinning reel according to a first embodiment of the invention;
Fig. 2 is a side section view of a mounting portion of the above spinning reel where a spool shaft and a spool are mounted;
Fig. 3 is a section view taken along the line A-A shown in Fig. 2;
Fig. 4 is a section view taken along the line B-B shown in Fig. 2;
Fig. 5 is a perspective view of a spool shaft with a rotation regulate member and a rattle regulate member mounted thereon;
Fig. 6 is a perspective view of the rattle regulate member;
Fig. 7 is a side section view of a mounting portion of a spinning reel according to a second embodiment of the invention where a spool shaft and a spool are mounted;
Fig. 8 is a section view taken along the line C-C shown in Fig. 7;
Fig. 9 is a perspective view of a portion of the second embodiment, showing a spool shaft with a rotation regulate member and a rattle regulate member mounted thereon;
Fig. 10 is a perspective view of the rattle regulate member according to the second embodiment;
Fig. 11 is a section view taken along the line D-D shown in Fig. 7;
Fig. 12 is a perspective view of a modification of the rattle regulate member; and
Fig. 13 is a perspective view of a further modification of the rattle regulate member.

Now, description will be given below of the preferred embodiments of a fishing spinning reel, wherein similar reference characters denote corresponding features throughout the figures.

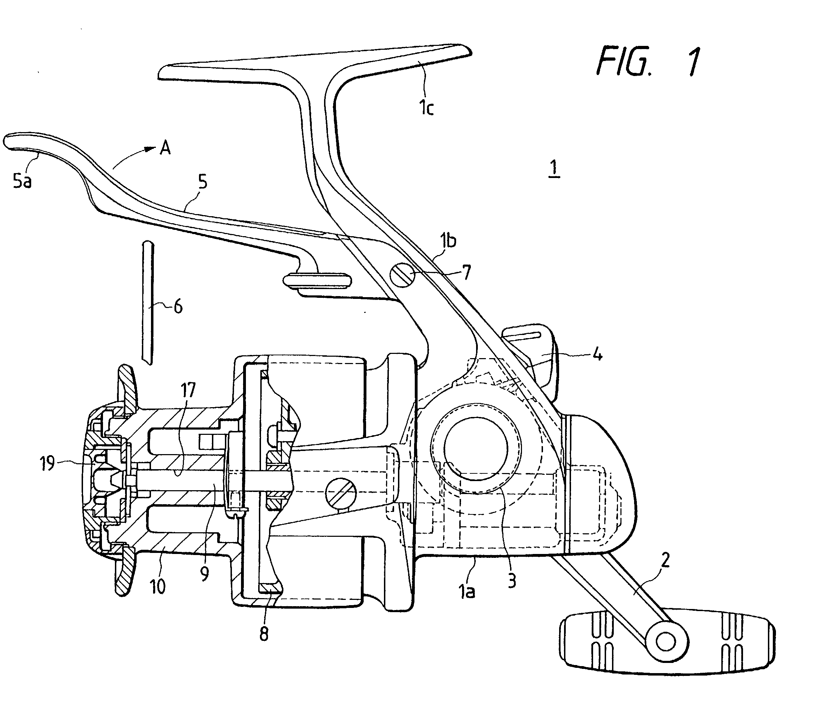

Fig. 1 shows a spinning reel for fishing 1 according to a first embodiment of the invention. As shown in Fig. 1, the spinning reel 1 includes a reel main body 1a, a leg portion 1b extending from the reel main body 1a, and a rod mounting portion 1c which is formed in the end portion of the leg portion 1b and can be mounted onto a fishing rod (not shown) . In the interior portion of the reel main body 1a, there is supported a handle shaft in a rotatable manner, while a handle 2 is fixed to the end portion of the handle shaft that projects out from the reel main body 1a.

A drive gear 3 is mounted on the handle shaft and, with the drive gear 3, there is meshingly engaged a pinion gear which extends in a direction intersecting at right angles to the handle shaft and is rotatably supported through a bearing. On the leading end portion of the pinion gear, there is integrally mounted a rotor 8 which includes a bail 6 and a fishing line guide device (not shown).

Also, into the interior portion of the pinion gear, there is inserted a spool shaft 9 which is supported in such a manner that it can be slided in a direction intersecting at right angles to the handle shaft and, in the leading end portion of the spool shaft 9, there is removably mounted a spool 10 around which a fishing line can be wound. And, an oscillating mechanism (not shown) is also engaged with the handle shaft. The oscillating mechanism is structured such that, when the handle shaft is rotated as the handle 2 is rotated, it can drive the spool shaft 9 in such a manner as to reciprocate along the axial direction thereof.

In the above-mentioned structure, if the handle 2 is rotated, then not only the spool 10, which is mounted on the spool shaft 9, is caused to reciprocate back and forth in the axial direction thereof through the oscillating mechanism, but also the rotor 8 is driven or rotated through the drive gear 3 and pinion gear. Thanks to this, the fishing line can be uniformly wound around the spool 10 through the fishing line guide device.

Also, on the reel main body 1a, there is disposed a reversal preventive device which prevents the reversed rotation of the rotor 8 (that is, the rotation thereof in a fishing line play-out direction). The present reversal preventive device includes a stopper lever 4 which is disposed on the back surface side of the reel main body 1a. In particular, if the stopper lever 4 is pressed down in one direction, then the reversal preventive device is operated to stop the rotation of the rotor 8; and, on the other hand, if the stopper lever 4 is pressed down in the other direction, then the stopping action of the reversal preventive device is removed so that the rotor 8 can be rotated in the reversed direction.

Further, on the reel main body 1a, there is further provided a brake mechanism which applies a brake force to the reversed rotation of the rotor 8. This brake mechanism includes a brake lever 5 which is rotatably mounted on the leg portion 1b through a support shaft 7 and, in the end portion of the brake lever 5, there is formed an operation portion 5a on which a finger can be put. And, if the brake lever 5 is operated or pulled up in a direction of an arrow A shown in Fig. 1 through the operation portion 5a thereof, then a brake force can be applied to the reversed rotation of the rotor 8.

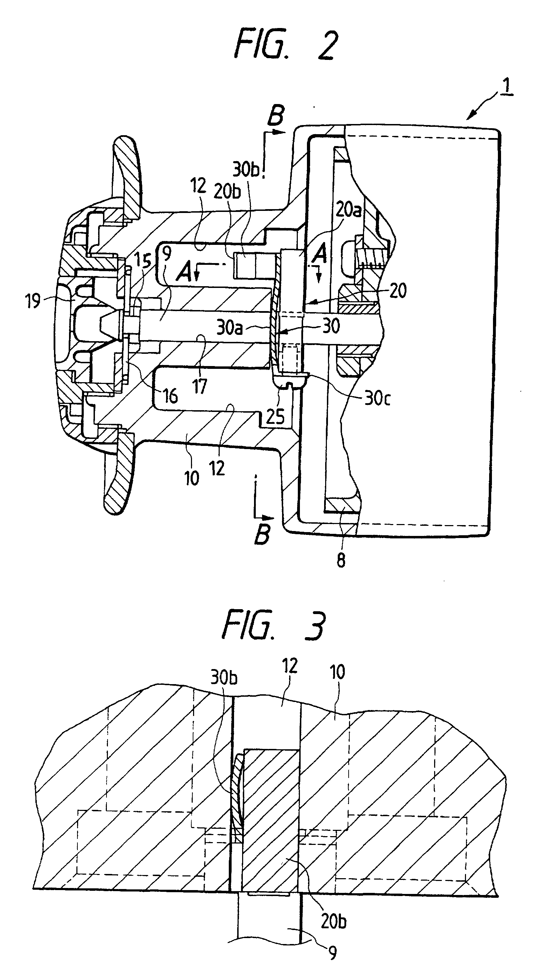

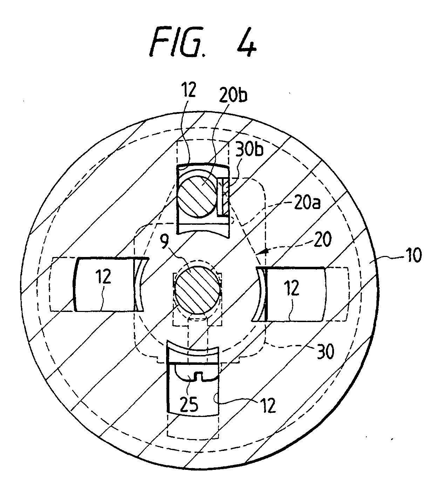

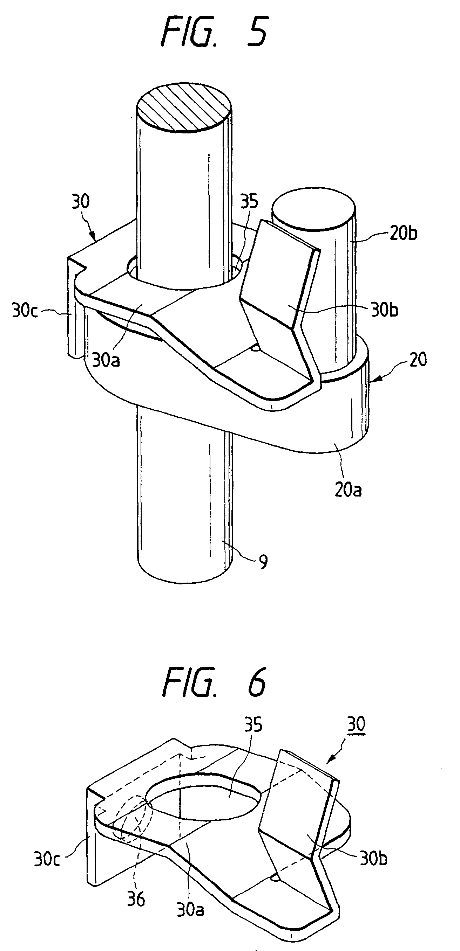

By the way, the spinning reel 1 includes a removal preventive mechanism for preventing the spool 10 from being removed from the spool shaft 9, and a rotation regulate mechanism for regulating the rotation of the spool 10 with respect to the spool shaft 9. As shown enlargedly in Fig. 2, the present removal preventive mechanism is composed of an annular groove 15 formed in the leading end portion of the spool shaft 9, and a spring member 16 which is provided in the leading end portion of the spool 10 and having such elasticity as to allow the spring member 16 itself to be engaged with the annular groove 15. On the other hand, the rotation regulate mechanism is composed of a plurality of (in the present embodiment, four) recessed portions 12 formed in the spool 10, and a rotation regulate member 20 which is mounted substantially in the middle position of the spool shaft 9 and includes a regulate projection 20b insertable into the recessed portions 12. In this case, the rotation regulate member 20, as shown in detail in Fig. 5, is composed of a support portion 20a to be unrotatably fixed to the spool shaft 9 and the regulate projection 20b which is projectingly provided on the support portion 20a and extends along the axial direction of the spool shaft 9. Also, the four recessed portions 12 respectively formed in the spool 10, as shown in Fig. 4 as well, are spaced from one another at given intervals in the peripheral direction of the spool 10 and, at positions where the regulate projection 20b can be inserted, extend along the axial direction of the spool shaft 9.

Also, on the rotation regulate member 20, there is disposed a rattle regulate member 30 which prevents the spool 10 mounted on the spool shaft 9 from rattling in the axial direction as well as in the rotation direction thereof. The rattle regulate member 30 is formed of a plate spring and, as shown in detail in Fig. 6, includes a first energizing plate 30a for regulating the rattle of the spool 10 in the axial direction thereof, a second energizing plate 30b for regulating the rattle of the spool 10 in the rotation direction thereof, and a mounting plate 30c to be mounted on the support portion 20a of the rotation regulate member 20. In the mounting plate 30c, there is formed a screw hole 36 and, by a screw 25 (see Figs. 2 and 4) which is threadedly engaged with the screw hole 36, the rotation regulate member 20 and play regulate member 30 are both integrally mounted on and fixed to the spool shaft 9 (see Fig. 5).

The first energizing plate 30a includes a through hole 35 through which the spool shaft 9 can be inserted and, as shown in Fig. 5, the plate 30a is thereby disposed along the support portion 20a of the rotation regulate member 20. Also, the first energizing plate 30a is bent in a dogleg shape and is pressure contacted at the bent portion thereof with the spool 10 to thereby be able to forwardly energize the spool 10 in the axial direction thereof.

On the other hand, the second energizing plate 30b extends in such a manner as to stand up from the first energizing plate 30a and, as shown in Fig. 5, the plate 30b is disposed in such a manner as to extend along the regulate projection 20b of the rotation regulate member 20. Also, the second energizing plate 30b is bent in a dogleg shape and is pressure contacted at the bent portion thereof with the inner surface of the recessed portion 12 of the spool 10 to thereby be able to energize the spool 10 in the rotation direction thereof.

Therefore, in this structure, if the spool 10 is mounted on the spool shaft 9, then the rotation and axial movement of the spool 10 with respect to the spool shaft 9 can be regulated by the removal preventive mechanism and rotation regulate mechanism and, at the same time, the rattle of the spool 10 in the axial direction as well as in the rotation direction thereof can be prevented by the rattle regulate member 30.

In other words, if the spool 10 is pushed in toward the rotor 8 side in such a manner that the leading end portion of the spool shaft 9 projectingly provided from the rotor 8 is inserted through a through hole 17 formed in the central portion of the spool 10, then not only the regulate projection 20b of the rotation regulate member 20 disposed on the spool shaft 9 is inserted or fitted into any one of the four recessed portions 12 formed on the spool 10 side, but also the spring member 16 on the spool 10 side is elastically engaged with the annular groove 15 of the spool shaft 9. This makes it possible to regulate the rotation and axial movement of the spool 10 with respect to the spool shaft 9. Also, at the then time, the spool 10 is energized forwardly by the first energizing plate 30a of the rattle regulate member 30 interposed between the support portion 20a of the rotation regulate member 20 and the spool 10, so that the spring member 16 of the spool 10 is always pressed against the end face of the annular groove 15. Due to this, even if there is present a clearance between the annular groove 15 and spring member 16, there is no possibility that the spool 10 can rattle in the axial direction thereof. Also, the spool 10 is energized in the rotation direction thereof by the second energizing plate 30b of the rattle regulate member 30 which is fitted into the recessed portion together with the regulate projection 20b, so that the inner surface of the recessed portion 12 is always pressed against the regulate projection 20b. Thanks to this, even if there is present a clearance between the recessed portion 12 and regulate projection 20b, there is no possibility that the spool 10 can rattle in the rotation direction thereof. By the way, in the present embodiment, if a removing button 19, which is disposed on the cap of the spool 10, is pressed in, then the engagement between the spring member 16 and annular groove 15 can be removed, so that the spool 10 can be removed from the spool shaft 9.

As has been described heretofore, with use of the spinning reel 1 according to the first embodiment of the invention, the prevention of the rattle of the spool 10 in the axial direction as well as in-the rotation direction thereof can be achieved simultaneously by the single rattle regulate member 30 which is disposed on the rotation regulate member 20. That is, the rattle of the spool 10 can be prevented by the structure which is very simple and is easy to assemble, with the result that the manufacturing cost of the spinning reel 1 can be reduced.

Also, in the spinning reel 1 according to the first embodiment, because the rattle regulate member 30 is mounted on and fixed to the spool shaft 9 in such a manner that they are assembled as an integrally united body, there is eliminated the need to form the spool 10 in such a manner as to have a special structure for prevention of the rattle thereof. Therefore, as a spool which can be substituted for the spool 10, a spool similar to a conventional spool can also be used. Due to this, the spinning reel 1 can be used efficiently and also can be applied in a wide range of uses.

By the way, according to the present embodiment, the rotation regulate member 20 and rattle regulate member 30 are mounted on and fixed to the spool shaft 9 in an integral manner by the screw 25. Alternatively, however, the rotation regulate member 20 and play regulate member 30 may also be fixed to the spool shaft 9 by pressure inserting or staking them.

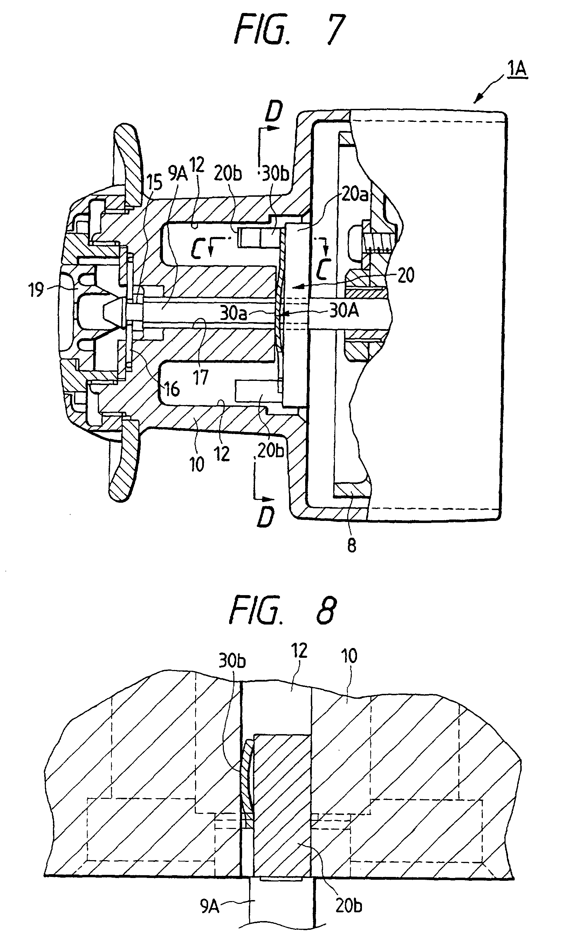

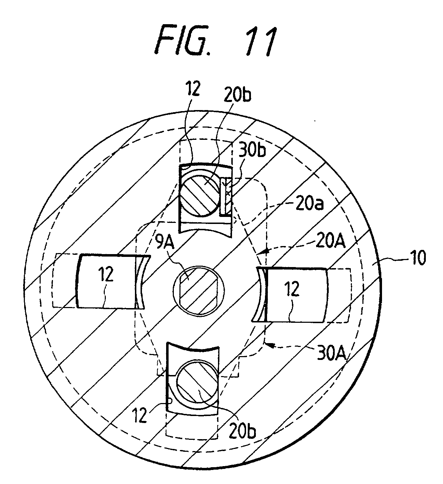

Now, Figs. 7 to 11 respectively show a second embodiment of a spinning reel for fishing according to the invention. By the way, a spinning reel for fishing according to the second embodiment is-different from the above-mentioned spinning reel for fishing according to the first embodiment only in the shapes of a spool shaft, rotation regulate member and rattle regulate member, while the remaining portions of the second embodiment are the same as those employed in the first embodiment. Therefore, description will be given below only of the portions of the second embodiment that are different from the first embodiment, whereas the components thereof used in common with the first embodiment are given the same designations and thus the description thereof is omitted here.

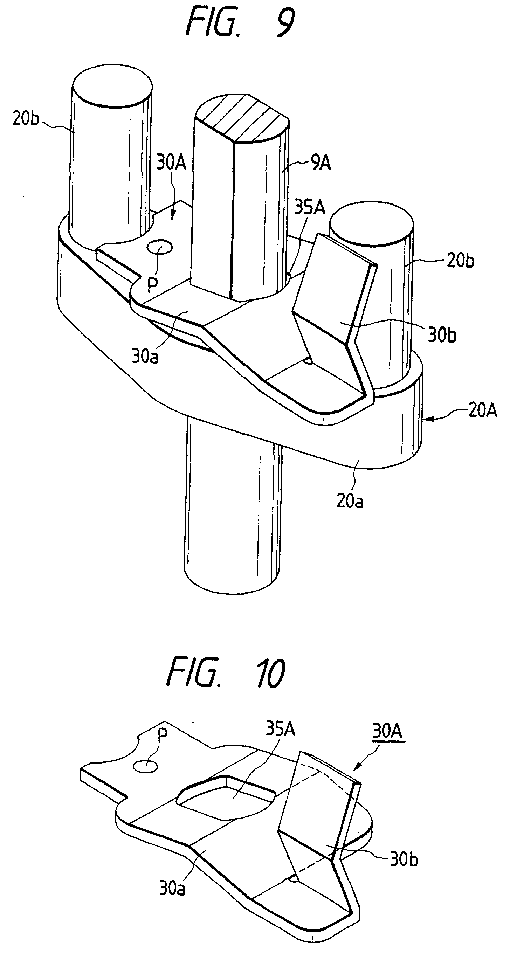

In particular, as shown in Fig. 9, a spinning reel 1A according to the second embodiment of the invention includes a spool shaft 9A the cross section of which is a circular shape with both flanks thereof cut away, that is, a flanks-cutaway circular shape. Also, a rotation regulate member 20A includes a support portion 20a, and two regulate projections 20b which are respectively provided on the two sides of the support portion 20a and both extend along the axial direction of the spool shaft 9A. In more particular, the support portion 20a includes a mounting hole formed identical in shape with the cross section of the spool shaft 9A, while the support-portion 20a is unrotatably mounted on and fixed to the spool shaft 9A through the present mounting hole. On the other hand, a rattle regulate member 30A, which is disposed on the rotation regulate plate 20A, as shown in Fig. 10, includes a first energizing plate 30a for regulating the rattle of the spool 10 in the axial direction thereof, and a second energizing plate 30b which is disposed in such a manner as to extend along one regulate projection 20b and also which is used to regulate the rattle of the spool 10 in the rotation direction; and, the rattle regulate member 30A is spot welded at a welding portion P thereof to the support portion 20a of the rotation regulate member 20A. Also, the first energizing plate 30a includes a through hole 35A formed identical in shape with the cross section of the spool shaft 9A, while the first energizing plate 30a is unrotatably mounted on and fixed to the spool shaft 9A through the present through hole 35A.

Therefore, in the above-mentioned structure, if the spool 10 is mounted on the spool shaft 9A, then, as shown in Figs. 7 and 8, not only the two regulate projections 20b of the rotation regulate member 20A are respectively inserted or fitted into the two mutually opposed recessed portions 12, but also the spring member 16 is elastically engaged with the annular groove 15 of the spool shaft 9A. Also, at the then time, the spool 10 is energized forwardly by the first energizing plate 30a interposed between the spool 10 and support portion 20a, so that the spring member 16 is always pressed-against the end face of the annular groove 15 of the spool shaft 9A. Further, the spool 10 is also energized in the rotation direction thereof by the second energizing plate 30b fitted into the recessed portion 12 together with one regulate projection 20b of the rotation regulate member 20A, so that the inner surface of the recessed portion 12 is always pressed against the regulate projection 20b of the rotation regulate member 20A. This not only can regulate the rotation and axial movement of the spool 10 with respect to the spool 9A but also can prevent the spool 10 from rattling in the axial direction and in the rotation direction thereof. By the way, in the present embodiment, it should be noted that the spool shaft 9A is not limited to the above-mentioned shape. The essential thing is to be able to regulate the rotation of the rotation regulate member 20A and rattle regulate member 30A and, therefore, for example, a rectangular shape can also be employed. Of course, in this case, the mounting hole of the rotation regulate member 20A and the through hole 35A of the rattle regulate member 30A are to be set in a rectangular shape which corresponds to the rectangular shape of the spool shaft 9A.

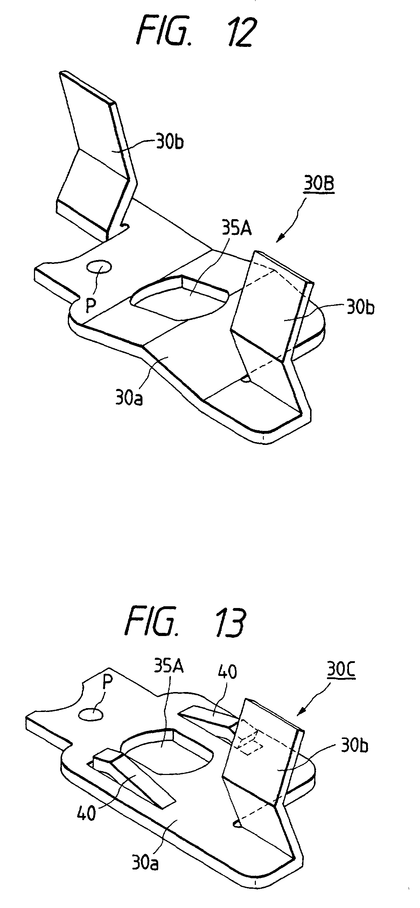

Now, Fig. 12 shows a modification of the rattle regulate member. As shown in Fig. 12, a rattle regulate member 30B according to the present modification includes two second energizing plates 30b which are respectively disposed on the two sides of a first energizing plate 30a. In this case, in order that the spool 10 can be energized in the same direction, the bending directions of the two second energizing plates 30b are set opposite to each other. By the way, the remaining portions of the present rattle regulate member 30B are identical with those of the rattle regulate member 30A employed in the second embodiment. In the rattle-regulate member 30B having this structure, the two second energizing plates 30b are respectively disposed along the two regulate projections 20b of the rotation regulate member 20A employed in the second embodiment. Therefore, the rattle of the spool 10 in the rotation direction thereof can be prevented more effectively.

Also, Fig. 13 shows another modification of the rattle regulate member 30A. As shown in Fig. 13, in a rattle regulate member 30C according to the present modification, a first energizing plate 30a thereof is not bent in a dogleg shape but, instead, the two portions of the first energizing plate 30a, which are respectively located on the two sides of a through hole 35A, are cut and raised to thereby provide spring portions 40 and 40; that is, the first energizing plate 30a can be pressure contacted at the two spring portions 40 and 40 with the spool 10 to thereby energize the spool 10 forwardly in the axial direction thereof. By the way, the remaining portions of the rattle regulate member 30C are the same as the rattle regulate member 30A according to the second embodiment. Therefore, with use of the present modified structure as well, there can be provided similar operation effects to the first and second embodiments.

As has been described hereinbefore, according to the spinning reel for fishing of the invention, not only the rattle of the spool in the axial direction and in the rotation direction thereof can be prevented by a simple structure, but also the manufacturing cost of the present spinning reel can be reduced.

While only certain embodiments of the invention have been specifically described herein, it will apparent that numerous modifications may be made thereto without departing from the spirit and scope of the invention, as defined in the appended claims.

## Claims

1. A fishing spinning reel (1) comprising:
a spool shaft (9) extending out from a reel main body (1a);
a spool (10) removably mounted on said spool shaft (9) and around which a fishing line can be wound;
regulate means (12, 15, 16, 20) for regulating the rotation and axial movement of said spool (10) with respect to said spool shaft (9); and
a single rattle regulate member (30, 30A, 30B, 30C) including a first energizing portion (30a, 40) for energizing said spool (10) in the axial direction thereof, and a second energizing portion (30b) for energizing said spool (10) in the rotation direction thereof, said rattle regulate member (30, 30A, 30B, 30C) being pressure contactable at said first and second energizing portions (30a, 40, 30b) thereof with said spool (10), which is mounted on said spool shaft (9) to thereby be able to prevent the rattle of said spool (10) in the rotation direction and in the axial direction thereof with respect to said spool shaft (9), **characterized in that** said regulate member (30, 30A, 30B, 30C) is formed of a plate spring.

2. A fishing spinning reel according to claim 1, **characterized in that** said regulate means (12, 15, 16, 20) includes a rotation regulate member (20) mounted on said spool shaft (9) and regulating the rotation of said spool (10) with respect to said spool shaft (9), and said rattle regulate member (30, 30A, 30B, 30C) is mounted on and fixed to said rotation regulate member (20).

3. A fishing spinning reel according to claim 2, **characterized in that** said first energizing portion (30a, 40) is disposed between said rotation regulate member (20) and said spool (10) so as to forwardly energize said spool (10), and said second energizing portion (30b) and a regulate projection (20b) extended from said rotation regulate member (20) are received in a recessed portion (12) provided in said spool (10).

## Patentansprüche

1. Drehspule zum Angeln (1) mit:
einer Spulenwelle (9), die sich aus einem Spulenhauptkörper (1a) heraus erstreckt;
einer Spule (10), entfernbar auf der Spulenwelle (9) montiert und um die die Angelschnur gewickelt werden kann;
einer Regulierungseinrichtung (12, 15, 16, 20) zur Regulierung der Drehung und der axialen Bewegung der Spule (10) in Bezug auf die Spulenwelle (9); und
einem einzelnes Ratterregulierungsteil (30, 30A, 30B, 30C), das einen ersten Anregungsabschnitt (30a, 40) zum Anregen der Spule (10) in die axiale Richtung derselben enthält, und einen zweiten Anregungsabschnitt (30b) zum Anregen der Spule (10) in die Drehrichtung derselben, wobei das Ratterregulierungsteil (30, 30A, 30B, 30C) an seinem ersten und zweiten Anregungsabschnitten (30a, 40, 30b) druckkontaktfähig mit der Spule (10) ist, die auf der Spulenwelle (9) montiert ist, um dadurch in der Lage zu sein das Rattern der Spule (10) in der Drehrichtung und in der axialen Richtung derselben in Bezug auf die Spulenwelle (9) zu verhindern, **dadurch gekennzeichnet, dass** das Regulierungsteil (30, 30A, 30B, 30C) aus einer Plattenfeder gebildet ist.

2. Drehspule zum Angeln nach Anspruch 1, **dadurch gekennzeichnet, dass** die Regulierungseinrichtung (12, 15, 16, 20) ein Drehregulierungsteil (20) enthält, montiert auf der Spulenwelle (9) und das die Drehung der Spule (10) in Bezug auf die Spulenwelle (9) reguliert, und das Ratterregulierungsteil (30, 30A, 30B, 30C) mit dem Regulierungsteil (20) montiert und an diesem befestigt ist.

3. Drehspule zum Angeln nach Anspruch 2, **dadurch gekennzeichnet, dass** der erste Anregungsabschnitt (30a, 40) zwischen dem Drehregulierungsteil (20) und der Spule (10) angeordnet ist, um die Spule (10) vorwärts anzuregen, und der zweite Anregungsabschnitt (30b) und ein Regulierungsvorsprung (20b), der sich von dem Drehregulierungsteil (20) erstreckt, in einem ausgenommenen Abschnitt (12), vorgesehen in der Spule (10), aufgenommen sind.

## Revendications

1. Un moulinet de pêche (1) comprenant :
un arbre de bobine (9) s'étendant à l'extérieur d'un corps principal de bobine (1a) ;
une bobine (10) montée de façon amovible sur ledit arbre de bobine (9) et autour duquel une ligne de pêche peut être enroulée ;
des moyens de régulation (12, 15, 16, 20) pour régler la rotation et le déplacement axial de ladite bobine (10) par rapport audit arbre de bobine (9) ; et
un organe de régulation de battement (30, 30A, 30B, 30C) unique, incluant une première partie d'actionnement (30a, 40) pour actionner ladite bobine (10) dans sa direction axiale, et une deuxième partie d'actionnement (30b) pour actionner ladite bobine (10) dans son sens de rotation, ledit organe de régulation de battement (30, 30A, 30B, 30C) étant susceptible d'être appliqué par un contact de pression sur lesdites premières et deuxièmes parties d'actionnement (30a, 40, 30b) de celui-ci avec ladite bobine (10), qui est montée sur ledit arbre de bobine (9), pour de cette manière être en mesure d'empêcher le battement de ladite bobine (10) dans le sens de la rotation et en direction axiale de celle-ci par rapport audit arbre de bobine (9), **caractérisé en ce que** ledit organe de régulation (30, 30A, 30B, 30C) est formé d'un ressort à lame.

2. Moulinet de pêche selon la revendication 1, **caractérisé en ce que** lesdits moyens de régulation (12, 15, 16, 20) comprennent un organe de régulation de rotation (20), monté sur ledit arbre de bobine (9) et réglant la rotation de ladite bobine (10) par rapport audit arbre de bobine (9), et ledit organe de régulation de battement (30, 30A, 30B, 30C) est monté sur et fixé audit organe de régulation de rotation (20).

3. Moulinet de pêche selon la revendication 2, **caractérisé en ce que** ladite première partie d'actionnement (30a, 40) est disposée entre ledit organe de régulation de rotation (20) et ladite bobine (10) de manière à actionner en sens avant ladite bobine (10), et ladite deuxième partie d'actionnement (30b) et une saillie de régulation (20b), s'étendant depuis ledit organe de régulation de rotation (20), étant logée dans une partie creusée (12) ménagée dans ladite bobine (10).
